(19) Europäisches Patentamt
European Patent Office
Office européen des brevets

(11) EP 1 820 832 B1

(12) **EUROPÄISCHE PATENTSCHRIFT**

(45) Veröffentlichungstag und Bekanntmachung des Hinweises auf die Patenterteilung:
**03.09.2008 Patentblatt 2008/36**

(51) Int Cl.:
***C09D 183/04*** *(2006.01)* ***C08G 77/12*** *(2006.01)*
***C08G 77/18*** *(2006.01)*

(21) Anmeldenummer: **07002249.6**

(22) Anmeldetag: **02.02.2007**

(54) **Organisch modifizierte Siloxane und deren Verwendung zur Herstellung von Zubereitungen für wasserabweisende Imprägnierungen für mineralische Baustoffe**

Organically modified siloxanes and their application in producing preparations for water-repellent impregnation for mineral building materials

Siloxane modifié organiquement et son utilisation pour la fabrication de préparations pour imprégnations hydrofuges pour matériaux de construction minéraux

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **15.02.2006 DE 102006007018**

(43) Veröffentlichungstag der Anmeldung:
**22.08.2007 Patentblatt 2007/34**

(73) Patentinhaber: **Evonik Goldschmidt GmbH
45127 Essen (DE)**

(72) Erfinder:
- **Herrwerth, Sascha
45128 Essen (DE)**
- **König, Frank
45884 Gelsenkirchen (DE)**
- **Lohse, Andrea
46236 Bottrop (DE)**

(56) Entgegenhaltungen:
**EP-A2- 0 476 452**
**US-A1- 2003 139 287**
**US-A1- 2004 186 260**
**US-B2- 6 482 912**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die Erfindung betrifft organisch modifizierte Siloxane und deren Verwendung zur Herstellung von Zubereitungen für wasserabweisende Imprägnierungen für mineralische Baustoffe auf der Basis organomodifizierter Siloxanverbindungen, die gleichzeitig an Si-Atomen gebundenen Wasserstoff und Alkoxygruppen im Molekül enthalten.

Seit vielen Jahren werden Organosilane oder Organosiloxane zur Imprägnierung poröser mineralischer Baustoffe eingesetzt, um diese vor dem Eindringen von Wasser zu schützen. Bei dieser hydrophobierenden Behandlung ist es besonders wichtig, dass die Wirkstoffe tief in den Baustoff eindringen und sich mit dem Baustoff chemisch oder physikalisch verbinden.

Die Penetration in den Baustoff wird begünstigt, wenn man als siliciumorganische Wirkstoffe möglichst niedermolekulare Verbindungen verwendet. Die Eindringtiefe kann zusätzlich durch die Mitverwendung organischer Lösungsmittel verbessert werden, die nach der Behandlung des Baustoffs verdunsten.

Hohe Reaktivität wird erreicht, wenn als siliciumorganische Verbindungen Organoalkoxysilane und/oder Organoalkoxysiloxane eingesetzt werden, die unter Einfluss von Feuchtigkeit kondensieren und mit dem Baustoff reagieren können. Dabei wird der Alkoxygruppe entsprechender Alkohol abgespalten, welcher in die Atmosphäre verdunstet.

Aus der US-4,486,476 ist eine solche Zubereitung mit einem Gehalt an Organoalkoxysilanen der allgemeinen Formel

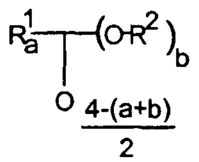

bekannt, wobei

$R^1$ ein Alkyl- oder Arylrest,

$R^2$ ein Alkylrest mit 1 bis 4 Kohlenstoffatomen,

a = 0,8 bis 1,5 und

b $\leq$ 2 ist.

Diese Zubereitung ist dadurch gekennzeichnet, dass sie aus

a) 1 bis 20 Gew.-% eines Gemisches von Organoalkoxysiloxanen der vorgenannten Formel, welches aus 25 bis 75 Gew.-% eines Siloxans, dessen Wert b = 0,1 bis 0,5 und 75 bis 25 Gew.-% eines Siloxans, dessen Wert b = 0,8 bis 2,0 ist, besteht, und wobei a+b $\leq$ 3 ist,

b) 80 bis 99 Gew.-% eines nicht mit Wasser mischbaren Lösungsmittels und

c) gegebenenfalls an sich bekannten Kondensationskatalysatoren besteht.

Das wesentliche Merkmal dieser Zubereitung besteht somit darin, die Imprägnierung nicht mit einem Organoalkoxysiloxan durchzuführen, dessen Molekulargewichtsverteilung im Wesentlichen nur ein einziges Maximum aufweist, sondern ein Gemisch von Organoalkoxysiloxanen zu verwenden, dessen Kennzeichen im unterschiedlichen Kondensationsgrad besteht.

Hierdurch wird eine hohe Eindringtiefe, verbunden mit hoher Wirksamkeit, insbesondere auf alkalischen Baustoffen, und ein guter, optisch sichtbarer Wasserabperleffekt gewährleistet.

Eine Verbesserung dieser Zubereitungen ist im Wesentlichen nur hinsichtlich der in der Praxis erreichbaren Eindringtiefe möglich. Diese Eindringtiefe wird im Wesentlichen von drei Faktoren beeinflusst, nämlich den verwendeten Lösungsmitteln, der Porosität der Baustoffe und der Sorgfalt, mit der die Anwendung dieser Zubereitungen in der Praxis erfolgt. Verbesserte Zubereitungen zur Imprägnierung müssen daher insbesondere an ihrem Penetrationsverhalten gemessen werden.

Infolge des gestiegenen Umweltbewusstseins wird die Verwendung organischer Lösungsmittel zunehmend als störend empfunden. Man hat sich deshalb insbesondere bemüht, vergleichbare Zubereitungen auf wässriger Basis zu entwickeln.

Weitere Entwicklungsarbeiten haben zu einem Verfahren geführt, das Gegenstand der US-4,781,950 ist. Diese Patentschrift betrifft ein Verfahren zum Imprägnieren von mineralischen Baustoffen, insbesondere Mauerwerk, mit wässrigen Lösungen von Silanolen und/oder Siloxanolen, die am Ort ihrer Verwendung durch Hydrolyse von Alkoxysilanen

und/oder Alkoxysiloxanen hergestellt werden, wobei man als Alkoxysilane und/oder Alkoxysiloxane Verbindungen der allgemeinen Formel

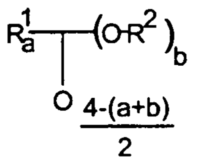

mit

| | |
|---|---|
| $R^1$ = | Alkylrest mit 1 bis 8 Kohlenstoffatomen, wobei im mittleren Molekül mindestens 90 % der Reste $R^1$ Alkylreste mit 1 bis 4 Kohlenstoffatomen sind, |
| $R^2$ = | Methyl- oder Ethylrest, |
| a = | 0 bis 1,5, |
| b = | 1,0 bis 4,0, |
| a+b = | 2,0 bis 4,0, |

auswählt, diese kontinuierlich in einer dem Verbrauch entsprechenden Menge hydrolysiert und die erhaltene Lösung innerhalb einer Zeitspanne von 3 bis 30 Minuten nach Vermischen der Reaktionspartner auf den mineralischen Baustoff aufbringt.

Bei dieser Verfahrensweise erzielt man eine hohe Penetration der wässrigen Zubereitungen in den mineralischen Baustoff, die mit der Penetration vergleichbar ist, die man bei der Verwendung lösungsmittelhaltiger Zubereitungen erreicht.

Diese wässrigen Lösungen müssen jedoch, wie in der DE-C-36 27 060 gefordert, aufgrund ihrer Lagerinstabilität am Ort ihrer Verwendung hergestellt werden.

In der veröffentlichten europäischen Patentanmeldung EP-A-0 234 024 ist für Zwecke der Hydrophobierung keramischen Materials eine wässrige Silanemulsion beschrieben, welche im Wesentlichen aus

a) 1 bis 40 Gew.-% eines hydrolysierbaren Silans mit einem Molekulargewicht bis zu etwa 500 und der allgemeinen Formel $R_nSi(R')_{4-n}$, wobei R ein gegebenenfalls halogenierter Kohlenwasserstoffrest mit 1 bis 20 C-Atomen, R' ein Alkoxyrest mit 1 bis 3 C-Atomen, ein Halogen-, Amino- oder Carboxylrest, n = 1 oder 2 ist, oder Oligomere dieser Silane und

b) 0,5 bis 50 Gew.-%, bezogen auf Silan, eines Emulgators mit einem HLB-Wert von 4 bis 15 und

c) Wasser,

besteht.

Als besonders bevorzugtes Silan wird Octyltriethoxysilan genannt. Tatsächlich weisen Emulsionen derartiger Silane, bei denen der Rest R mehr als 6 Kohlenstoffatome aufweist, erhöhte Stabilität auf, da die Hydrolysegeschwindigkeit dieser reaktiven Silane herabgesetzt ist.

Nachteilig ist jedoch, dass zwangsläufig auch die Hydrolyse dieser Silane im Baustoff entsprechend langsam erfolgt und in geeigneter Weise katalysiert werden muss. In einigen Baustoffen, wie frischem Beton, ist dies durch deren hohe Alkalität möglich. In neutralen oder schwach alkalischen Baustoffen, wie gebranntem Klinker und zahlreichen Natursteinen, ist dies jedoch nicht möglich. Ohne eine solche Katalyse erfolgt jedoch keine Verankerung der Silane an der Oberfläche des Baustoffs.

Die Silane können von der Oberfläche verdunsten oder mechanisch entfernt werden. Dies führt zu einer Verarmung der Oberfläche an Silanen und damit zu einer Verminderung der Hydrophobierung. Dies hat zur Folge, dass der Wasserabperleffekt schwach oder gar nicht vorhanden ist. Das Wasseraufnahmevermögen in der verarmten Oberflächenschicht ist hoch, so dass gerade diese, der Witterung und dem mechanischen Angriff besonders ausgesetzte Schicht, unzureichend geschützt ist. Diese Zubereitungen können somit nur bei bestimmten Baustoffen eingesetzt werden.

Eine Imprägnieremulsion mit guter Wirkung auf alkalischen und neutralen Baustoffen ist in der US-5,091,002 beschrieben. Sie enthält 2,5 bis 25 Gew.-% eines Alkoxysilans der allgemeinen Formel

$R^1\text{-Si}(OR^2)_3$

wobei

$R^1$ = ein Alkylrest mit 3 bis 12 Kohlenstoffatomen und
$R^2$ = ein Methyl- oder Ethylrest ist,

2 bis 20 Gew.-% eines Alkoxysiloxans der allgemeinen Formel

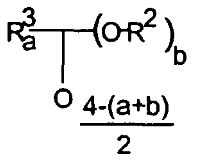

wobei

$R^3$ = ein Alkylrest mit 1 bis 6 Kohlenstoffatomen,
a = 0,8 bis 1,2 und
b = 0,2 bis 1,2 ist,

0,01 bis 5 Gew.-% eines Emulgators,
0,01 bis 0,1 Gew.-% Füllstoffe mit einer wirksamen Oberfläche von mindestens 40 $m^2/g$ und
49,9 bis 95,48 Gew.-% Wasser.

Diese Imprägnieremulsion weist im Allgemeinen gute Abperleffekte sowohl auf alkalischen wie auf neutralen mineralischen Substraten auf. Benotet man die mit dieser Emulsion erzielbaren Effekte nach dem weiter unten gegebenen Bewertungsschema, zeigt sich, dass die besten Ergebnisse erzielt werden, wenn

a) der Emulgatorgehalt niedrig ist,
b) in der Emulsion hydrophobierte Kieselsäure und
c) ein Härtungskatalysator für die siliciumorganischen Verbindungen

vorhanden ist.

Bei niedrigem Emulgatorgehalt ist aber die Stabilität der Imprägnieremulsion nur begrenzte Zeit gegeben. Ist in der Emulsion hydrophobierte Kieselsäure enthalten, setzt sich diese bei der Lagerung häufig ab und macht ein sorgfältiges Umrühren am Ort der Anwendung, also der Baustelle, notwendig.

Diese Sorgfalt ist nicht immer vorhanden. Der Härtungskatalysator begrenzt schließlich den zeitlichen Verarbeitungsspielraum der Emulsion und kann zur vorzeitigen Aushärtung des Wirkstoffs in der Emulsion bei der Lagerung führen.

Weitere Entwicklungsarbeiten haben zu einem Verfahren geführt, das Gegenstand der DE-A-40 29 640 ist. Diese befasst sich mit dem Problem der Verbesserung der anwendungstechnischen Eigenschaften solcher Imprägnieremulsionen, insbesondere mit dem Problem der Herstellung lagerbeständiger Emulsionen, die zu einem hohen Abperleffekt innerhalb kurzer Zeit, in der Regel innerhalb eines Tages, führen, ohne dass ein Zusatz von hydrophobierter Kieselsäure oder spezieller Härtungskatalysatoren erforderlich ist. 'Diese Zubereitungen sind Emulsionen, enthaltend Mischungen u.a. aus verschiedenen Siloxanverbindungen, die zur Aushärtung eine Kondensationsreaktion eingehen und dabei leicht flüchtige Alkohole (VOC) in Mengen zwischen 250 und 500 g/l abspalten.

Dies führt zu einem niedrigen Nutzungsgrad des Wirkstoffes und einer erhöhten Belastung der Umwelt. Hinzu kommt, dass bei wässrigen Systemen/Emulsionen, bedingt durch die Alkoholabspaltung, die Lagerstabilität der Systeme eingeschränkt wird, da die Emulsionen durch den freien Alkohol brechen. Was zur Folge hat, dass die Wirkstoffe kondensieren und somit später bei der Anwendung nicht mehr ausreichend penetrieren.

Infolge des gestiegenen Umweltbewusstseins wird die Verwendung solcher VOC-reicher Formulierungen zunehmend als störend empfunden. Man hat sich deshalb insbesondere bemüht, vergleichbare aber VOC-arme Zubereitungen zu entwickeln, wobei dies auch leicht flüchtige Lösungsmittel umfasst.

Der Erfindung lag die Aufgabe zugrunde, ein umweltverträgliches, den Untergrund hydrophobierendes System zu finden, welches einerseits gut in einen mineralischen oder organischen Baustoff eindringt, einen guten Abperleffekt aufweist und gleichzeitig eine reduzierte Freisetzung von flüchtigen organischen Bestandteilen bietet und unabhängig von der Beschaffenheit des Substrats aushärtet.

Diese Aufgabe wird überraschenderweise gelöst durch den Einsatz von organomodifizieten Siloxanverbindungen, die gleichzeitig Wasserstoff und Alkoxygruppen im Molekül enthalten.

Ein Gegenstand der Erfindung sind daher organomodifizierte Siloxanverbindungen der allgemeinen Formel (I)

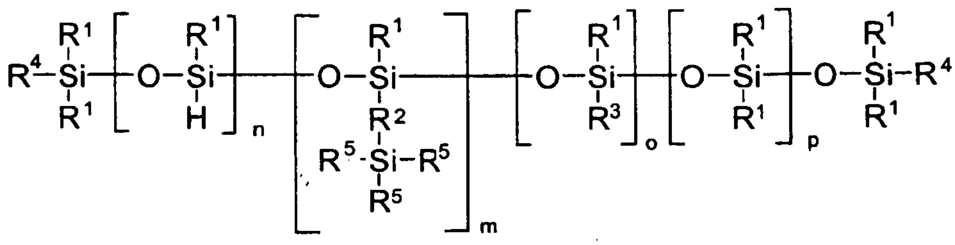

worin bedeuten

- $R^1$ gleiche oder verschiedene Reste, ausgewählt aus der Gruppe der linearen oder verzweigten, gesättigten oder ein- bzw. mehrfach ungesättigten Alkyl-, Aryl-, Alkylaryl- oder Arylalkylreste mit 1 bis 20 Kohlenstoffatomen, insbesondere 1 bis 10 Kohlenstoffatomen oder Halogenalkylgruppen mit 1 bis 20 Kohlenstoffatomen, besonders bevorzugt zu ≥ 90 % Methylgruppen sind,
- $R^2$ gleiche oder verschiedene Alkylen-Reste mit 1 bis 20 C-Atomen, vorzugsweise <10 C-Atome, insbesondere 1 bis 5 C-Atome, die Ether-, Ester-, Urethan- oder Amidgruppen, besonders bevorzugt Ethylenreste,
- $R^3$ Oxyalkylenrest der Formel (II) darstellt,

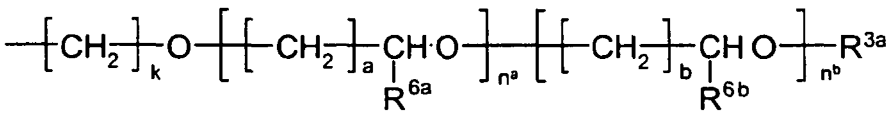

wobei

$R^{3a}$, unabhängig voneinander Wasserstoff, gegebenenfalls verzweigte, gegebenenfalls Heteroatomsubstituenten tragende, gegebenenfalls ungesättigte Alkyl- oder Arylreste sein können, vorzugsweise Methyl- und/oder Ethylreste sind, und

$R^{6a}$, $R^{6b}$ unabhängig voneinander gegebenenfalls verzweigte, gegebenenfalls Heteroatomsubstituenten tragende, gegebenenfalls ungesättigte, gegebenenfalls Alkyl- oder Arylreste sein können, vorzugsweise Wasserstoff, Methyl- und/oder Ethylreste sind und

k 2 bis 11,

a, b, unabhängig voneinander Zahlen zwischen 1 und 4 sind und

$n^a$, $n^b$ unabhängig voneinander Zahlen zwischen 0 und 50 darstellen, mit $1 < n^a+n^b \leq 50$, vorzugsweise mit $1 < n^a+n^b \leq 30$, insbesondere $1 < n^a+n^b \leq 15$, wobei sowohl eine statistische als auch eine blockweise Anordnung der Oxyalkylen-Einheiten vorliegen kann,

- $R^4$ unabhängig voneinander $R^1$, $-R^2-Si(R^5)_3$, $R^3$ oder H,
- $R^5$ gleiche oder verschiedene Alkyl-, Alkoxy-, Aryl-, Aryloxy- oder Alkenylreste mit 1 bis 20 Kohlenstoffatomen, vorzugsweise eine Methoxy- und/oder Ethoxygruppe ist, mit der Maßgabe, dass $R^5$ mindestens einmal eine Alkoxygruppe ist,
- n 1 bis 20, vorzugsweise 1 bis 10, insbesondere 1 bis 5,
- m 0 bis 20, wobei m nur 0 ist wenn $R^4$ der Rest $-R^2-Si(R^5)_3$ ist, ansonsten ist $m \geq 1$, vorzugsweise 0 bis 10 insbesondere < 5,
- o 0 bis 20, vorzugsweise 1 bis 10, insbesondere ≤ 5,
- p 1 bis 200, vorzugsweise 10 bis 100, insbesondere 10 bis 50.

Ein weiterer Gegenstand der Erfindung sind Konzentrate wässriger Emulsionen zur wasserabweisenden Imprägnierung anorganischer und organischer Substrate enthaltend

a) 10 bis 80 Gew.-%, vorzugsweise 20 bis 60 Gew.-%, insbesondere 30 bis 50 Gew.-% der allgemeinen Formel (I), bevorzugt Verbindungen mit $R^4$ entspricht $R^2-Si(R^5)_3$ Alkoxyfunktion als $R^5$ und n < 5, m 0, sowie o+p < 50 oder Alkoxyfunktion als $R^5$ und n < 5, m 1 bis 5, sowie o+p < 50,

b) 0,5 bis 10 Gew.-% eines Emulgators oder Emulgatorgemisches, vorzugsweise 1,0 bis 5,0 Gew.-%, insbesondere 2,0 bis 3,5 Gew.-%,

c) 10 bis 89,5 Gew.-% Wasser und gegebenenfalls

d) 0 bis 0,5 Gew.-% Konservierungsmittel.

Mit den erfindungsgemäßen Verbindungen, insbesondere den wässrigen Konzentraten und/oder den auf Anwendungskonzentration verdünnten Formulierungen können prinzipiell alle anorganischen und organischen Substrate imprägniert, d.h. hydrophobiert werden.

Erfindungsgemäß bevorzugt sind mineralische oder holzhaltige Werkstoffe und Fertigteile sowie Erzeugnisse daraus wie beispielsweise Steine, Platten, Fliesen, Mörtel-, Betonmassen, Isoliermaterialien für Wärme- und Schallisolierung.

Erfindungsgemäß mitverwendete Emulgatoren sind ein oder mehrere Verbindungen aus der Gruppe der nichtionogene Emulgatoren, d.h. Anlagerungsprodukte von Alkylenoxiden, vorzugsweise Ethylenoxid, an Verbindungen mit aktivem Wasserstoff, wie Fettalkohole, Alkylphenole, wie Octylphenol, Nonylphenol oder Dodecylphenol. Der Gehalt an Oxyethyleneinheiten soll dabei so groß sein, dass der HLB-Wert der Emulgatoren zwischen 6 und 20, insbesondere 10 und 18 liegt.

Prinzipiell können alle im Stand der Technik bekannten Konservierungsmittel eingesetzt werden. Erfindungsgemäß bevorzugt werden Produkte der Gruppe: Kombination von Heterocyclen und Methylol-Derivaten (beispielsweise N-Methylolchloracetamid, 5-Chlor-2-methyl-2-hisothiazol-3-on) oder Gemische aus Halbacetalen mit ungefährlichen Beimengungen (beispielsweise [1,2-Ethanediyl-bis-(oxy)]-bis-methanol) eingesetzt.

Die Herstellung der erfindungsgemäßen Emulsion kann in der Weise erfolgen, dass man die Bestandteile a), b) und d) getrennt emulgiert oder eine Mischung der Bestandteile gemeinsam emulgiert. Dabei wird zweckmäßig der Emulgator der zu emulgierenden Komponente (oder zu deren Gemisch) gegeben und das emulgatorhaltige Gemisch gegebenenfalls erwärmt. Zu dieser Mischung wird dann unter gutem Rühren das Wasser c) zugegeben. Die entstehende oder entstandene Emulsion kann mittels geeigneten Rührvorrichtungen, die vorzugsweise nach dem Rotor/Stator-Prinzip arbeiten, homogenisiert werden. Es können auch Kolloidmühlen zur Verminderung der Teilchengröße der emulgierten Phase verwendet werden.

Beispiele:

Nachfolgende Beispiele sollen zur Verdeutlichung der Erfindung dienen, sie stellen keinerlei Einschränkung dar.

Im Folgenden bedeuten:

M = $-Si-(CH_3)_3$
N = Gesamtkettenlänge Si-Kette
D = $-Si(CH_3)_2-$
D'= $-Si(R)(CH_3)-$

Beispiel 1:

Umsetzung von einem mittelständigen SiH-Siloxan (N =27,5, M-D20.5-D'5-M; SiH-Wert: 0,248 %) mit Styrol (Brenntag) und Dynasilan® VTMO (Vinyltrimethoxysilan, Degussa AG) unter Verwendung eines Pt-haltigen Katalysators. 1016 g des SiH-Siloxans (SiH-Wert: 0,248 %), 52 g Styrol und Karstedt-Katalysator (10 ppm Pt bezogen auf Ansatz) werden vorgelegt und auf 80 °C erhitzt. Die auftretende Exothermie führt zu einem Temperaturanstieg auf ca.
103 °C. Nach 3 h werden 126 g Dynasilan® VTMO innerhalb von 3 h zugetropft, wobei die Temperatur 110 °C nicht übersteigen darf. Nach beendeter Zugabe wird noch 1 h bei 110 °C nachreagiert.
Nach der Abdestillation der flüchtigen Verbindungen und einer Filtration erhält man eine klare, leicht gelbliche Flüssigkeit, die einen SiH-Wert von 0,097 % aufweist.

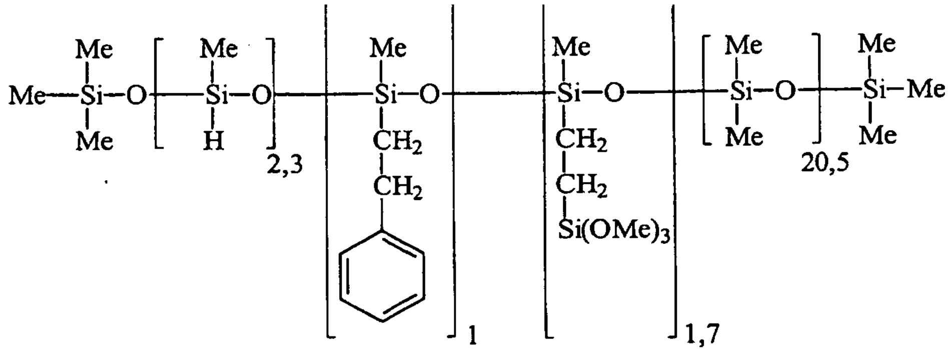

Beispiel 2:

Umsetzung von einem mittelständigen SiH-Siloxan (N = 27,5, M-D20.5-D'5-M; SiH-Wert: 0,248 %) mit einem Allylalkohol gestarteten, methyl-endverkappten, propylenoxidhaltigen Polyether ($-CH_2=CH-CH_2-(OC_3H_6)_{18}-OMe$; Mw ca. 1.100) und Dynasilan® VTEO (Vinyltriethoxysilan, Degussa AG) unter Verwendung eines Pt-haltigen Katalysators. 691 g des SiH-Siloxans (SiH-Wert: 0,248 %), 348 g Allylalkohol gestarteter, methyl-endverkappter, propylenoxidhaltiger Polyether ($CH_2=CH-CH_2-(OC_3H_6)_{18}-OMe$; Mw ca. 1.100) und Karstedt-Katalysator (10 ppm Pt bezogen auf Ansatz) werden vorgelegt und auf 80 °C erhitzt. Die auftretende Exothermie führt zu einem Temperaturanstieg auf ca. 100 °C. Nach 3 h werden 110 g Dynasilan® VTEO innerhalb von 3 h zugetropft, wobei die Temperatur 110 °C nicht übersteigen darf. Nach beendeter Zugabe wird noch 1 h bei 110 °C nachreagiert.
Nach der Abdestillation der flüchtigen Verbindungen und einer Filtration erhält man eine klare, leicht gelbliche Flüssigkeit, die einen SiH-Wert von 0,08 % aufweist.

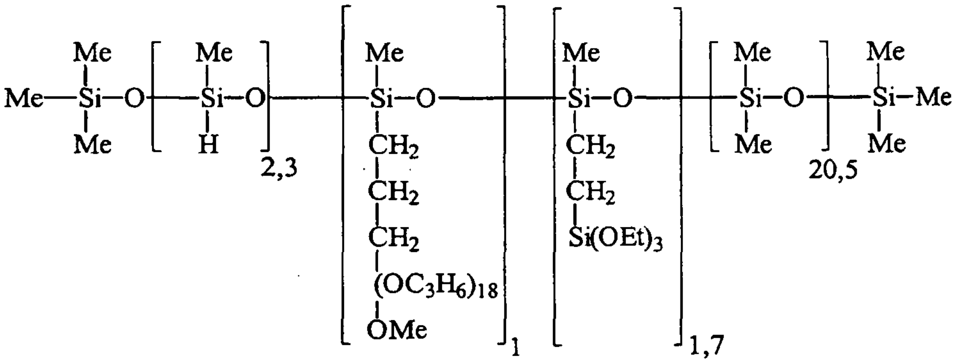

Beispiel 3:

Umsetzung von einem mittelständigen SiH-Siloxan (N = 27,5, M-D20.5-D'5-M; SiH-Wert: 0,248 %) mit 1-Hexadecen und Dynasilan® VTEO (Vinyltriethoxysilan, Degussa AG) unter Verwendung eines Pt-haltigen Katalysators. 955 g des SiH-Siloxans (SiH-Wert: 0,248 %), 106 g 1-Hexadecen und Karstedt-Katalysator (10 ppm Pt bezogen auf Ansatz) werden vorgelegt und auf 80 °C erhitzt. Die auftretende Exothermie führt zu einem Temperaturanstieg auf ca. 95 °C. Nach 3 h werden 152 g Dynasilan® VTEO innerhalb von 3 h zugetropft, wobei die Temperatur 110 °C nicht übersteigen darf. Nach beendeter Zugabe wird noch 2 h bei 110 °C nachreagiert.
Nach der Abdestillation der flüchtigen Verbindungen und einer Filtration erhält man eine klare, farblose Flüssigkeit, die einen SiH-Wert von 0,095 % aufweist.

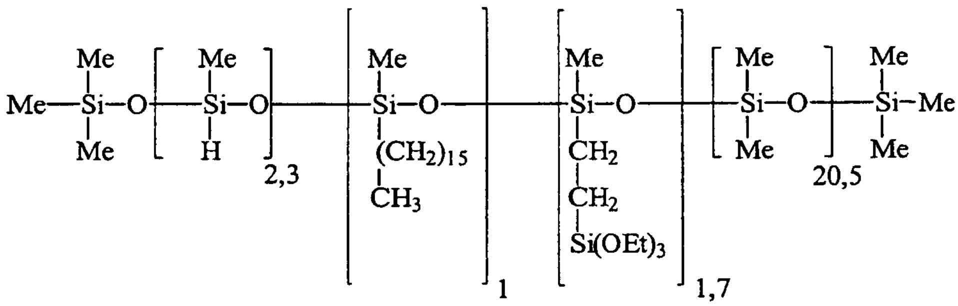

Beispiel 4:

Umsetzung von einem mittelständigen SiH-Siloxan (N = 27,5, M-D20.5-D'5-M; SiH-Wert: 0,248 %) mit Dynasilan® VTEO (Vinyltriethoxysilan, Degussa AG) unter Verwendung eines Pt-haltigen Katalysators.
305 g des SiH-Siloxans (SiH-Wert: 0,248 %) und Karstedt-Katalysator (10 ppm Pt bezogen auf Ansatz) werden vorgelegt und auf 100 °C erhitzt. Anschließend werden 45,6 g VTEO innerhalb von 1 h zugetropft, wobei die Temperatur 110 °C nicht übersteigen darf. Nach beendeter Zugabe wird noch 2 h bei 110 °C nachreagiert.

Nach der Abdestillation der flüchtigen Verbindungen und einer Filtration erhält man eine klare, farblose Flüssigkeit, die einen SiH-Wert von 0,15 % aufweist.

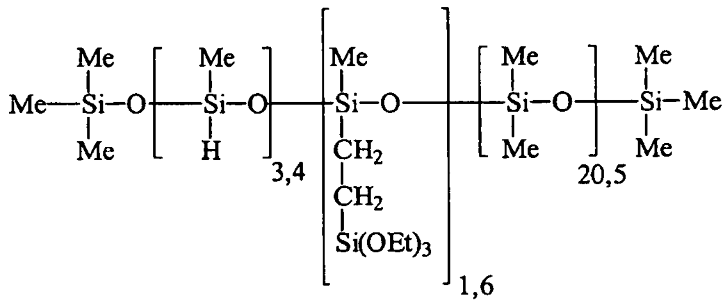

Beispiel 5:

Herstellung der Emulsionen für die anwendungstechnische Ausprüfung. 19 g eines Emulgatorgemisches bestehend aus einem ethoxylierten Triglycerid mit einem HLB-Wert von 18 und einem ethoxylierten Fettalkohol mit einem HLB-Wert von 11 im Gleichgewichtsverhältnis von 6:4 werden in 479 g Wasser gelöst. In die Lösung wird, bezeichnet als 5a bis 5d, separat Beispiel 1 bis 4 gerührt und mittels einer Emulgiermaschine (Spalthomogenisator) zu einer stabilen Emulsion verarbeitet.

Diese Konzentrate können direkt verwendet werden oder durch einfaches Verdünnen mit Wasser auf die gewünschte Anwendungskonzentrationen eingestellt werden. Diese sind abhängig von der Art der zu hydrophobierenden Baustoffe, insbesondere deren Porosität bzw. deren Saugfähigkeit. In der Regel sind das Formulierungen, die ca. 10 Gew.-% an Verbindungen der allgemeinen Formel (I) enthalten.

Anwendungstechnische Prüfung:

Die anwendungstechnische Prüfung von Bautenschutzmitteln umfasst die Beurteilung des Abperleffektes, die Bestimmung der Wasseraufnahme in Anlehnung an DIN 52103 und die Bestimmung der Eindringtiefe an fünf imprägnierten Kalksandsteinen.
Die Formulierungen wurden gemäß folgender Testprozedur geprüft:

Material und Reagenzien

Kalksandsteine, Normalformat, Terca®-Vorklinker

Die Steine werden auf folgendes Format geschnitten:

20 mm X 70 mm X 55 mm

Bautenschutzemulsion (50 %ig): 100 g
Leitungswasser: 400 g
Laborwaage (0,1 g - Anzeige)
Tauchbehälter mit Kunststoffgitter

(130 mm X 90 mm X 90 mm; B X H X T)

Wasserbad mit Kunststoffgitter
Tiegelzange
Stoppuhr

Durchführung:

Reinigen und Klimatisieren der Kalksandsteine:

Die geschnittenen Kalksandsteine werden 24 Stunden bei Raumtemperatur gewässert und mit Wasser und einer Bürste solange gesäubert, bis sämtlicher Staub entfernt ist. Anschließend werden die gereinigten Prüfkörper im Trockenschrank bei ca. 105 °C / 24 Stunden lang getrocknet und dann bei Raumtemperatur (ca. 23 °C) bis zur Gewichtskonstanz gelagert.

Imprägnieren der Steine:

Die gereinigten und klimatisierten Kalksandsteine werden eine Minute lang in die anwendungsfertige Lösung (enthaltend 10 Gew.-% der Verbindungen der allgemeinen Formel (I)) getaucht. Die dabei überstehende Flüssigkeitssäule soll ca. 10 bis 15 mm betragen. Die getränkten Steine werden mit der Tiegelzange aus dem Bad genommen und bei Raumtemperatur auf einem Gitter 7 Tage lang abgelüftet.

Bestimmung des Abperleffektes:

Zur Bestimmung des Abperleffektes wird nach einem Tag und 7 Tagen nach der Imprägnierung 0,5 ml dest. Wasser mit Hilfe einer Pipette auf die Steinoberfläche aufgelegt. Der Auslauf der Pipette sollte dabei die Oberfläche leicht berühren, damit der Tropfen nicht seitlich abläuft. Nach 10 Minuten wird der Wassertropfen abgeschüttelt und anschließend erfolgt die Beurteilung des Abperleffektes. Die Güte des Abperleffektes wird anhand der nachstehenden Beurteilungskriterien (siehe Punkt 8) erstellt. Der Abperleffekt ist von allen Prüfkörpern zu bestimmen und der Mittelwert wird ermittelt.

Bestimmung der Wasseraufnahme:

Nach 7 bis 14 Tagen (abhängig vom Substrat) Lagerung, auf einem Gitter, bei Raumtemperatur werden die Prüfkörper (M1) gewogen und in ein Wasserbad gegeben. Das dafür vorgesehene Bad wird mit einem Kunststoffgitter ausgelegt.
Die Wassersäule über dem Stein muss 50 mm betragen. Nach 24 h nimmt man die Steine aus dem Wasserbad, entfernt mit Putzpapier das Oberflächenwasser und wiegt den Prüfköper (M2).
Das Ergebnis wird in Gew.-% angegeben. Es wird immer ein Blindwert mitbestimmt.

Bestimmung der Eindringtiefe:

Nach der Bestimmung der Wasseraufnahme werden die Prüfkörper über Nacht bei 105 °C getrocknet und anschließend mit einem Hammer gespalten. Die Bruchflächen werden mit Wasser benetzt. Die nicht imprägnierten

Stellen erscheinen dunkel, während die imprägnierten hydrophoben Zonen nicht benetzt werden und hell bleiben. Ist an einem Prüfkörper eine stark unterschiedliche Eindringtiefe erkennbar, so ist das arithmetische Mittel zu bilden.

Auswertung:

Beurteilungskriterien des Abperleffektes:

0 = Der Wassertropfen kann nicht auf die Steinoberfläche aufgelegt werden.
1 = Der Wassertropfen ist nicht aufgesogen; keine Benetzung der Oberfläche durch den Tropfen.
2 = Der Wassertropfen ist nicht aufgesogen; ca. die Hälfte der Steinoberfläche unter dem Wassertropfen ist benetzt.
3 = Der Wassertropfen ist nicht aufgesogen; die Steinoberfläche unter dem Wassertropfen ist voll benetzt.
4 = Weniger als 10 % des Wassertropfens ist aufgesogen; Dunkelfärbung der Steinoberfläche unter dem Wassertropfen.
5 = 50 % des Wassertropfens ist aufgesogen.
6 = Der Wassertropfen ist vollständig aufgesogen.

Der Abperleffekt nach 7 Tagen sollte mindestens der Note 3 entsprechen.
Berechnungsformel für die Wasseraufnahme ($W_A$)

$$\frac{(M_2 - M_1) * 100}{M_1} = W_A$$

Das Ergebnis wird in Gew.-% angegeben. Die Reduzierung der Wasseraufnahme nach 24 Stunden, sollte mindestens 70 % bezogen auf den Blindwert sein.

Eindringtiefe:

Die Eindringtiefe wird durch Brechen des Steines und anschließender Benetzung gemessen. Der nicht benetzte Rand wird in mm ausgemessen.

| Ausprüfung auf Beton B 35: | | | |
|---|---|---|---|
| Produkt | Abperleffekt [0 = gut bis 6 = schlecht] | Eindringtiefe [mm] | Wasseraufnahme nach Druckwasser Lagerung [%] |
| Beispiel 5c | 3 | 1,8 | 1,0 (Reduzierung 80 %) |
| Beispiel 5d | 3 | 2 | 0,9 (Reduzierung 82 %) |
| Blindwert | 6 | - | 5,0 |

| Ausprüfung auf Kalksandstein: | | | |
|---|---|---|---|
| Produkt | Abperleffekt [0 = gut bis 6 = schlecht] | Eindringtiefe [mm] | Wasseraufnahme nach Druckwasser Lagerung [%] |
| Beispiel 5c | 2 | 2,5 | 1,0 (Reduzierung 93 %) |
| Beispiel 5d | 2 | 2,3 | 1,0 (Reduzierung 93 %) |
| Blindwert | 6 | - | 14,5 |

| Ausprüfung auf Terca®-Klinker: | | | |
|---|---|---|---|
| Produkt | Abperleffekt [0 = ut bis 6 = schlecht] | Eindringtiefe [mm] | Wasseraufnahme nach Druckwasser Lagerung [%] |
| Beispiel 5a | 1 | >10 | 0,9 (Reduzierung 93 %) |
| Beispiel 5d | 2 | >10 | 0,7 (Reduzierung 95 %) |
| Blindwert | 6 | - | 13,5 |

**Patentansprüche**

**1.** Organomodifizierte Siloxanverbindungen der allgemeinen Formel (I)

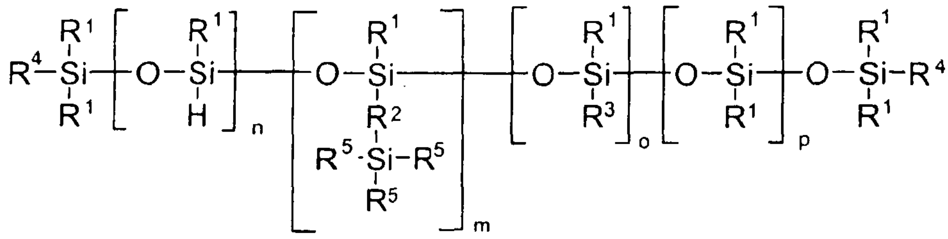

worin bedeuten

$R^1$ einen oder mehrere gleiche oder verschiedene Reste, ausgewählt aus der Gruppe der linearen oder verzweigten, gesättigten oder ein- bzw. mehrfach ungesättigten Alkyl-, Aryl-, Alkylaryl-oder Arylalkylreste mit 1 bis 20 Kohlenstoffatomen,
$R^2$ gleiche oder verschiedene Alkylen-Reste mit 1 bis 20 C-Atomen,
$R^3$ Oxyalkylenrest der Formel (II) darstellt,

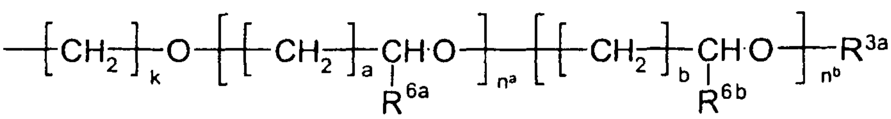

(II)

wobei

$R^{3a}$, $R^{6a}$, $R^{6b}$ unabhängig voneinander Wasserstoff, vorzugsweise Methyl- und/oder Ethylreste sind oder ein gegebenenfalls verzweigter, gegebenenfalls Heteroatomsubstituenten tragender, gegebenenfalls ungesättigter Alkyl- oder Arylrest sein kann und

k 2 bis 11,
a, b unabhängig voneinander Zahlen zwischen 1 und 4 sind und
$n^a$, $n^b$ unabhängig voneinander Zahlen zwischen 0 und 50 darstellen, mit $1 < n^a+n^b \leq 50$

mit der Maßgabe, dass sowohl eine statistische als auch eine blockweise Anordnung der Oxyalkylen-Einheiten vorliegen kann,

$R^4$ unabhängig voneinander $R^1$, $-R^2-Si(R^5)_3$, $R^3$ oder H ist,

$R^5$ gleiche oder verschiedene Alkyl-, Alkoxy-, Aryl-, Aryloxy- oder Alkenyl-Reste mit 1 bis 20 Kohlenstoffatomen ist, vorzugsweise eine Methoxy-und/oder Ethoxygruppe, mit der Maßgabe, dass $R^5$ mindestens einmal eine Alkoxygruppe ist
n 1 bis 20,
m 0 bis 20, wobei m nur 0 ist, wenn $R^4$ der Rest $-R^2-Si(R^5)_3$ ist, ansonsten ist $m \geq 1$,
O 0 bis 20,
p 1 bis 200, ist.

**2.** Verbindungen gemäß Anspruch 1, **dadurch gekennzeichnet, dass** $R^1 \geq 90$ % aus Methylgruppen besteht und $R^2$ ein Alkylenrest mit 1 bis 5 C-Atomen ist.

**3.** Verbindungen gemäß mindestens einem der Ansprüche 1 bis 2, **dadurch gekennzeichnet, dass** $R^3$ ein Rest der allgemeinen Formel (II) ist, worin $R^{3a}$ ein Methyl-und/oder Ethylrest und $R^{6a}$, $R^{6b}$ gleich oder verschieden Wasserstoff, Methyl- und/oder Ethylreste sind.

**4.** Verbindungen gemäß mindestens einem der Ansprüche 1 bis 3, **dadurch gekennzeichnet, dass** $R^3$ ein Rest der allgemeinen Formel (II) ist, worin $R^{3a}$ ein Methyl-und/oder Ethylrest und $R^{6a}$, $R^{6b}$ gleich oder verschieden Wasserstoff, Methyl- und/oder Ethylreste sind, mit der Maßgabe, dass mindestens einer der Reste Wasserstoff ist.

**5.** Verbindungen gemäß mindestens einem der Ansprüche 1 bis 4, **dadurch gekennzeichnet, dass** $R^3$ ein Rest der allgemeinen Formel (II) ist, worin die Alkoxyreste $[\ ]n^a$ und $[\ ]n^b$ Blockcharakter aufweisen.

**6.** Verbindungen gemäß mindestens einem der Ansprüche 1 bis 5, **dadurch gekennzeichnet, dass** $R^4$ der Rest $-R^2-Si(R^5)_3$ ist, worin $R^2$ ein Alkylenrest mit 1 bis 5 C-Atomen ist und $R^5$ mindestens einmal eine Methoxy-oder Ethoxygruppe ist.

**7.** Verbindungen gemäß mindestens einem der Ansprüche 1 bis 6, **dadurch gekennzeichnet, dass** $1 < n^a+n^b \leq 15$ ist.

**8.** Verbindungen gemäß mindestens einem der Ansprüche 1 bis 6, **dadurch gekennzeichnet, dass** n, m, o < 5 und p = 10 bis 50 ist, mit der Maßgabe, dass im Molekül mindestens eine SiH-Bindung und mindestens eine Alkoxygruppe vorliegt.

**9.** Verwendung mindestens einer der Verbindungen der Ansprüche 1 bis 8 zur Herstellung von wässrigen Zubereitungen zur wasserabweisenden Imprägnierung anorganischer und organischer Substrate.

**10.** Verwendung mindestens einer der Verbindungen der Ansprüche 1 bis 8 zur Herstellung von wässrigen Zubereitungen zur wasserabweisenden Imprägnierung poröser mineralischer Baustoffe.

**11.** Wässrige Zubereitungen zur wasserabweisenden Imprägnierung poröser mineralischer Baustoffe enthaltend

a) 10 bis 80 Gew.-%, Verbindungen der Ansprüche 1 bis 8,
b) 0,5 bis 10 Gew.-% eines Emulgators oder Emulgatorgemisches,
c) 10 bis 89,5 Gew.-% Wasser und gegebenenfalls
d) 0 bis 0,5 Gew.-% Konservierungsmittel.

## Claims

**1.** Organomodified siloxane compound of the general formula (I)

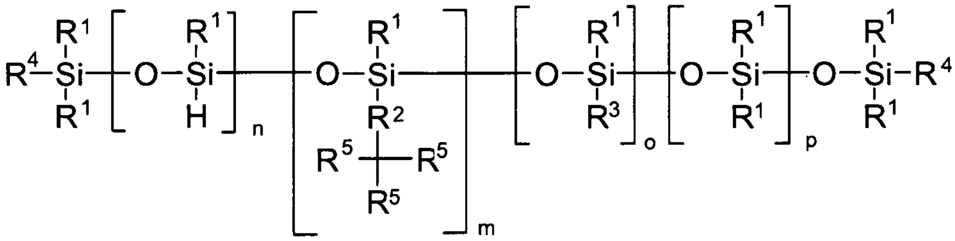

where

the radicals $R^1$ are identical or different radicals selected from the group consisting of linear or branched, saturated or monounsaturated or polyunsaturated alkyl, aryl, alkylaryl or arylalkyl radicals having from 1 to 20 carbon atoms,
the radicals $R^2$ are identical or different alkylene radicals which have from 1 to 20 carbon atoms,
$R^3$ is an oxyalkylene radical of the formula (II),

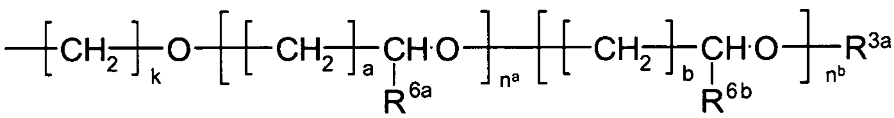

where

$R^{3a}$, $R^{6a}$, $R^{6b}$ are each, independently of one another, hydrogen, preferably methyl and/or ethyl or can each be a branched or unbranched, unsubstituted or heteroatom-substituent-bearing, saturated or unsaturated alkyl or aryl radical and
k is from 2 to 11,
a, b are each, independently of one another, a number in the range from 1 to 4 and
$n^a$, $n^b$ are each, independently of one another, a number in the range from 0 to 50, where $1 < n^a+n^b \leq 50$,

with the proviso that a random or blockwise arrangement of the oxyalkylene units can be present,

the radicals $R^4$ are each, independently of one another, $R^1$, $-R^2-Si(R^5)_3$, $R^3$ or H,
the radicals $R^5$ are identical or different alkyl, alkoxy, aryl, aryloxy or alkenyl radicals having from 1 to 20 carbon atoms, preferably a methoxy and/or ethoxy group, with the proviso that at least one $R^5$ is an alkoxy group,
n is from 1 to 20,
m is from 0 to 20, with m only being 0 when $R^4$ is the radical $-R^2-Si(R^5)_3$ and otherwise being ≥ 1,
o is from 0 to 20,
p is from 1 to 200.

2. Compound according to Claim 1, **characterized in that** ≥ 90% of the radicals $R^1$ are methyl groups and $R^2$ is an alkylene radical having from 1 to 5 carbon atoms.

3. Compound according to at least one of Claims 1 and 2, **characterized in that** $R^3$ is a radical of the general formula (II) in which $R^{3a}$ is a methyl and/or ethyl radical and $R^{6a}$, $R^{6b}$ are identical or different and are each hydrogen, methyl or ethyl.

4. Compound according to at least one of Claims 1 to 3, **characterized in that** $R^3$ is a radical of the general formula (II) in which $R^{3a}$ is a methyl and/or ethyl radical and $R^{6a}$, $R^{6b}$ are identical or different and are each hydrogen, methyl or ethyl, with the proviso that at least one of the radicals is hydrogen.

5. Compound according to at least one of Claims 1 to 4, **characterized in that** $R^3$ is a radical of the general formula (II) in which the alkoxy radicals [ ]$n^a$ and [ ]$n^b$ have a block character.

6. Compound according to at least one of Claims 1 to 5, **characterized in that** $R^4$ is the radical $-R^2-Si(R^5)_3$ in which $R^2$ is an alkylene radical having from 1 to 5 carbon atoms and at least one radical $R^5$ is a methoxy or ethoxy group.

7. Compound according to at least one of Claims 1 to 6, **characterized in that** 1 < $n^a+n^b$ s 15.

8. Compound according to at least one of Claims 1 to 6, **characterized in that** n, m, o < 5 and p = 10 to 50, with the proviso that at least one SiH bond and at least one alkoxy group are present in the molecule.

9. Use of at least one of the compounds of Claims 1 to 8 for producing aqueous preparations for the water-repellent impregnation of inorganic and organic substrates.

10. Use of at least one of the compounds of Claims 1 to 8 for producing aqueous preparations for the water-repellent impregnation of porous mineral building materials.

11. Aqueous preparation for the water-repellent impregnation of porous mineral building materials, which comprises

a) from 10 to 80% by weight of compounds according to any of claims 1 to 8,
b) from 0.5 to 10% by weight of an emulsifier or emulsifier mixture,
c) from 10 to 89.5% by weight of water and, if desired,
d) from 0 to 0.5% by weight of preservative.

## Revendications

1. Composés siloxane modifiés organiquement de formule générale (I) :

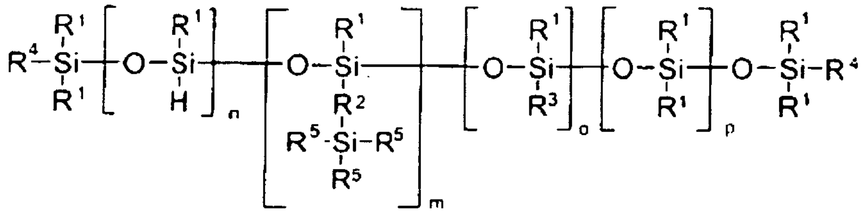

où

$R^1$ représente un ou plusieurs radicaux identiques ou différents, choisis dans le groupe constitué par les radicaux alkyle, aryle, alkylaryle ou arylalkyle linéaires ou ramifiés, saturés ou insaturés voire polyinsaturés, avec de 1 à 20 atomes de carbone,
$R^2$ représente des radicaux alkyle identiques ou différents avec de 1 à 20 atomes de carbone,
$R^3$ représente un radical oxyalkylène de formule (II),

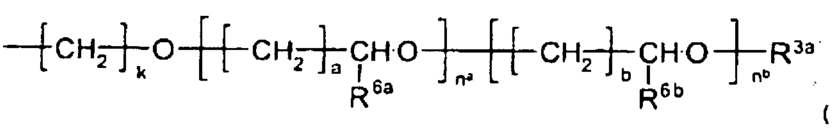

(II)

où

$R^{3a}$ $R^{6a}$ , $R^{6b}$ représentent indépendamment les uns des autres un hydrogène, de préférence un radical méthyle et/ou éthyle, ou peuvent représenter un radical alkyle ou aryle éventuellement insaturé, portant éventuellement des substituants hétéroatomiques et éventuellement ramifié et

k vaut de 2 à 11,
a, b sont indépendamment l'un de l'autre des nombres entre 1 et 4 et
$n^a$, $n^b$ sont indépendamment l'un de l'autre des nombres entre 0 et 50, avec $1 < n^a+n^b \leq 50$

en précisant qu'il peut s'agir tout aussi bien d'une disposition statistique que d'une disposition en bloc des unités oxyalkylène,

$R^4$ est indépendamment $R^1$, $-R^2-Si(R^5)_3$ $R^3$ ou H,

les radicaux $R^5$ sont des radicaux alkyle, alcoxy, aryle, aryloxy ou alcényle identiques ou différents avec de 1 à 20 atomes de carbone, de préférence un groupe méthoxy et/ou éthoxy, en précisant que $R^5$ est au moins une fois un groupe alcoxy

n va de 1 à 20,
m va de 0 à 20, m étant 0 uniquement quand $R^4$ est le radical $-R^2-Si(R^5)_3$, sinon $m \geq 1$,
o va de 0 à 20,
p va de 1 à 200.

**2.** Composés selon la revendication 1, **caractérisés en ce que** ≥ 90% des radicaux $R^1$ sont des groupes méthyle et $R^2$ est un radical alkylène avec de 1 à 5 atomes de carbone.

**3.** Composés selon au moins l'une quelconque des revendications 1 à 2, **caractérisés en ce que** $R^3$ est un radical de formule générale (II), où $R^{3a}$ est un radical méthyle et/ou éthyle et $R^{6a}$, $R^{6b}$ sont des radicaux hydrogène, méthyle et/ou éthyle identiques ou différents.

**4.** Composés selon au moins l'une quelconque des revendications 1 à 3, **caractérisés en ce que** $R^3$ est un radical de formule générale (II), où $R^{3a}$ est un radical méthyle et/ou éthyle et $R^{6a}$, $R^{6b}$ sont des radicaux hydrogène, méthyle et/ou éthyle identiques ou différents, en précisant qu'au moins un des radicaux est un hydrogène.

**5.** Composés selon au moins l'une quelconque des revendications 1 à 4, **caractérisés en ce que** $R^3$ est un radical de formule générale (II), dans lequel les radicaux alcoxy présentent un caractère de bloc $[\,]n^a$ et $[\,]n^b$.

**6.** Composés selon au moins l'une quelconque des revendications 1 à 5, **caractérisés en ce que** $R^4$ est le radical $-R^2-Si(R^5)_3$, où $R^2$ est un radical alkylène avec de 1 à 5 atomes de carbone et $R^5$ est au moins une fois un groupe méthoxy ou éthoxy.

**7.** Composés selon au moins l'une quelconque des revendications 1 à 6, **caractérisés en ce que** $1 < n^a+n^b$ s 15.

**8.** Composés selon au moins l'une quelconque des revendications 1 à 6, **caractérisés en ce que** n, m, o < 5 et p = 10 à 50, en précisant qu'au moins une liaison SiH et au moins un groupe alcoxy sont présents dans la molécule.

**9.** Utilisation d'au moins l'un des composés selon les revendications 1 à 8 servant à la fabrication de préparations aqueuses permettant l'imprégnation hydrofuge de substrats inorganiques et organiques.

**10.** Utilisation d'au moins l'un des composés selon les revendications 1 à 8 servant à la fabrication de préparations aqueuses permettant l'imprégnation hydrofuge de matériaux de construction minéraux poreux.

**11.** Préparations aqueuses permettant l'imprégnation hydrofuge de matériaux de construction minéraux poreux contenant :

a) de 10 à 80 % en poids de composés selon les revendications 1 à 8,
b) de 0,5 à 10 % en poids d'un émulsifiant ou mélange émulsifiant,
c) de 10 à 89,5 % en poids d'eau et éventuellement
d) de 0 à 0,5 % en poids d'un agent conservateur.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4486476 A
- US 4781950 A
- DE 3627060 C
- EP 0234024 A
- US 5091002 A
- DE 4029640 A